(19) Europäisches Patentamt
European Patent Office
Office européen des brevets

(11) Veröffentlichungsnummer: **0 163 893**
**B1**

(12) # EUROPÄISCHE PATENTSCHRIFT

(45) Veröffentlichungstag der Patentschrift: **19.07.89**

(21) Anmeldenummer: **85104854.6**

(22) Anmeldetag: **22.04.85**

(51) Int. Cl.⁴: **C 08 L101/02**, C 08 L 71/00 // (C08L71/00, 81:06),(C08L71/00, 67:00),(C08L71/00, 69:00),(C08L71/00, 79:08)

(54) **Thermoplastische Formmassen.**

(30) Priorität: **08.05.84 DE 3416856**

(43) Veröffentlichungstag der Anmeldung: **11.12.85 Patentblatt 85/50**

(45) Bekanntmachung des Hinweises auf die Patenterteilung: **19.07.89 Patentblatt 89/29**

(84) Benannte Vertragsstaaten: **BE DE FR GB IT NL**

(56) Entgegenhaltungen:
**EP–A– 0 134 252**
**EP–A– 0 147 708**
**EP–A– 0 161 453**
**EP–A– 0 193 003**
**DE–A– 3 227 933**
**DE–A– 3 414 492**
**FR–A– 2 122 562**
**US–A– 4 375 427**

(73) Patentinhaber: **BASF Aktiengesellschaft**
**Carl-Bosch-Strasse 38**
**D-6700 Ludwigshafen (DE)**

(72) Erfinder: **Zeiner, Hartmut, Dr.**
**Johann-Strauss-Strasse 13**
**D-6831 Plankstadt (DE)**
Erfinder: **Heinz, Gerhard, Dr.**
**Im Vogelsang 2**
**D-6719 Weisenheim (DE)**
Erfinder: **Neumann, Peter, Dr.**
**Franz-Schubert-Strasse 1**
**D-6908 Wiesloch (DE)**
Erfinder: **Fischer, Juergen, Dr.**
**Thomas-Mann-Strasse 62**
**D-6700 Ludwigshafen (DE)**
Erfinder: **Nissen, Dietmar, Dr.**
**Ziegelhaeuser Landstrasse 31**
**D-6900 Heidelberg (DE)**

**EP 0 163 893 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft thermoplastische Formmassen, die ein Gemisch aus einem temperaturbeständigen Thermoplasten und einem reaktive Gruppen enthaltenden temperaturbeständigen Thermoplasten enthalten.

Formteile aus amorphen temperaturbeständigen Thermoplasten sind nicht lösungsmittelbeständig und spannungsrißbeständig, wodurch ihre Verwendung im Automobilsektor beeinträchtigt wird. Mat hat schon vorgeschlagen, Comonomere, welche reaktive Gruppen tragen, in die Thermoplasten einzubauen, um auf diese Weise zu verzweigten, lösungsmittelbeständigen Polymeren zu kommen. Durch den Einbau von Comonomeren wird jedoch die Herstellung der Thermoplasten umständlich und teuer.

Der Erfindung lag nun die Aufgabe zugrunde, aud einfache Weise vernetzbare thermoplastiche Formmassen auf Basis von temperaturbeständigen Polymeren bereitzustellen.

Diese Aufgabe wird durch die erfindungsgemäße Formmasse gelöst. Diese enthalten ein Gemisch von

A. 1 bis 99 Gew.-Teilen, vorzugsweise 20 bis 90 und insbesondere 50 bis 90 Gew.-Teilen eines keine reaktiven Gruppen enthaltenden amorphen thermoplastischen Polymeren mit einer Glastemperatur oberhalb von 80 °C, vorzugsweise oberhalb von 130 °C, oder teilkristallinen thermoplastischen Polymeren mit einer Glastemperatur oberhalb von 80 °C und einem Schmelzpunkt oberhalb von 200 °C, und

B. 99 bis 1 Gew.-Teilen, vorzugsweise 10 bis 80 und insbesondere 10 bis 50 Gew.-Teilen eines reaktive Gruppen enthaltenden thermoplastischen Polymeren mit einer Glastemperatur oberhalb von 80 °C, vorzugsweise oberhalb von 130 °C.

In der älteren Patentanmeldung EP-A-161 453 sind temperaturbeständige aromastische Polyether mit funktionellen Gruppen beschrieben, die vernetzbar sind. Abmischungen dieser Polyether mit keine reaktive Gruppen tragenden thermoplastischen Polymeren sind nicht erwähnt.

In der älteren Patentanmeldung EP-A-134 252 sind Mischungen aus Polyetherimid und Polyphenylensulfid beschrieben. Letzteres enthält zwar reaktive Schwefelbrücken, ist aber nicht identisch mit einem der hier beanspruchten Polymeren B. Außerdem ist dem Dokument kein Hinweis auf eine Nachvernetzung der Mischungen zu entnehmen.

Als Polymere A kommen insbesondere amorphe Polymere in Frage, vorzugsweise

Polyethersulfone

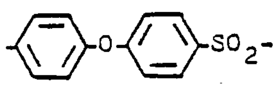

Polysulfone

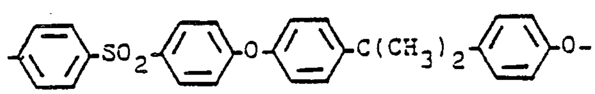

Polyetherimide

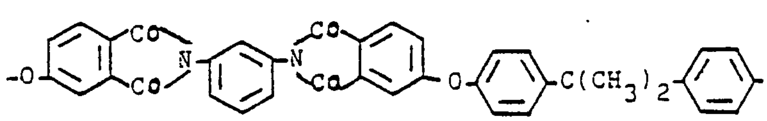

Polycarbonate, aromatische Polyester und aromatische Polyether.

Dies sind amorphe, in niedrig siedenden organischen Lösungsmitteln lösliche, thermoplastische Polymere mit einer Glastemperatur oberhalb von 80 °C, vorzugsweise oberhalb von 100 °C und insbesondere oberhalb von 130 °C.

Als Polymere A können grundsätzlich auch teilkristalline thermoplastiche Polymere mit einem Schmelzpunkt vorzugsweise oberhalb von 200 °C eingesetzt werden, beispielsweise Polyetherketone oder Polyamide.

Die Polymeren B sind thermoplastische Polymere mit einer Glastemperatur oberhalb von 80 °C, vorzugsweise oberhalb von 100 °C und insbesondere oberhalb von 130 °C. Sie sind vorzugsweise ebenfalls amorph und in organischen Lösungsmitteln löslich, wobei in manchen Fällen auch die Löslichkeit in höhersiedenden polaren Lösungsmitteln, wie Dimethylsulfoxid oder N-Methylpyrrolidon ausreicht. Die Polymeren B enthalten als reaktive Gruppen Schwefelbrücken und gegebenenfalls Nitrilgruppen.

Die Polymeren B sind aromatische Polyether der Formel

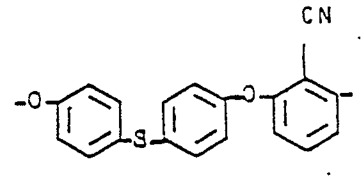

(I)

oder der Formel

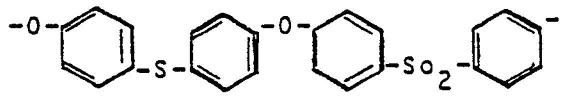

(II)

sowie aromatische Polysulfidketone der Formel

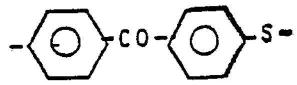

(III)

oder

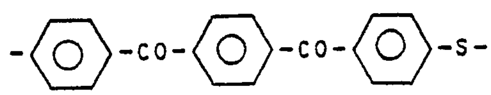

(IV)

Die Herstellung der aromatischen Polyether der Formeln I und II kann nach den üblichen Verfahren erfolgen. Bevorzugt werden Diphenol und Dihalogenverbindungen in etwa äquivalenten Mengen in Gegenwart von wasserfreiem Alkalicarbonat polykondensiert, wobei vorzugsweise in polaren aprotischen Lösungsmitteln bei Temperaturen zwischen 120 °C und 200 °C gearbeitet wird. So hergestellte Polyarylether weisen einen mittleren Polymerisationsgrad von 5 bis 500, bevorzugt von 50 bis 250, auf. Ihre Glastemperatur liegt vorzugsweise zwischen 140 und 160 °C.

Die aromatischen Polysulfidketone der Formeln III und IV werden hergestellt durch Umsetzung einer aromatischen Dihalogenverbindung, bei der jedes Halogenatom durch eine in para-Stellung stehende Ketogruppe aktiviert ist, mit einer im wesentlichen äquivalenten Menge eines Alkalimetallsulfids in einem polaren Lösungsmittel, vorzugsweise in einem Lactam.

Besonders bevorzugte Formmassen sind Mischungen aus

A. 98 bis 80 Gew.-Teilen Polyethersulfon oder Polysulfon und
B. 2 bis 20 Gew.-Teilen eines Polymeren der Formeln I, II, III oder IV.

Bei einphasigen Mischungen, bei denen die Komponente B in der Komponente A molekulardispers verteilt ist, kann die Vernetzung der Kunststoffmatrix besonders leicht erfolgen und ist dann praktisch vollständig.

Die thermoplastischen Formmassen können neben den Polymeren A und B noch übliche Zusatzstoffe, wie Füllstoffe, Farbstoffe, Flammschutzmittel, Stabilisatoren und Katalysatoren enthalten, vorzugsweise Verstärkungsfasern in Mengen von 25 bis 300 Gew.%, bezogen auf (A + B).

Die erfindungsgemäßen Formmassen können hergestellt werden durch einfaches Vermischen der Polymeren A und B in der Schmelze, z. B. in einem Extruder oder einem Kneter. Man kann auch Lösungen der beiden Polymere miteinander versmichen und daraus das Polymere ausfällen oder die Lösung direkt weiterverarbeiten. Ferner ist es möglich, die Polymeren in Wasser oder einem anderen Nicht-Lösungsmittel zu dispergieren und die beiden Dispersionen zu vermischen. Schließlich kann man auch eine Komponente in einer Lösung der anderen Komponente dispergieren. Die beiden Komponenten A und B sollten in der erfindungsgemäßen Formmasse möglichst homogen gemischt sein, d. h. molekular dispergiert sein.

Die erfindungsgemäßen Formmassen sind geeignet zur Herstellung von temperatur- und lösungsmittelbeständigen Formkörpern, wie z. B. Formteile, Folien, Fasern, Klebstoffen und Beschichtungen. Dazu werden sie zunächst geformt und ihre Kunststoffmatrix wird dann anschließend so vernetzt, daß sie in niedrigsiedenden organischen Lösungsmitteln praktisch nicht mehr löslich ist; die Glastemperatur der Kunststoffmatrix sollte dabei vorzugsweise um mindestens 10 °C ansteigen. Das Vernetzen erfolgt zweckmäßigerweise dadurch, daß man die Formkörper mindestens 5 min., vorzugsweise 1 bis 24 Stunden lang auf Temperaturen oberhalb von 200 °C, vorzugsweise auf Temperaturen zwischen 250 und 450 °C

erhitzt. Dabei können Vernetzungskatalysatoren, z. B. Lewis-Säuren, wie $ZnCl_2$ oder $AlCl_3$, Oxide, wie $Al_2O_3$ oder $Fe_2O_3$, aromatische Bisulfide oder Radikalbildner, wie Azodicarbonamid anwesend sein, die vorher den Formmassen zugemischt wurden.

Die in dem Beispiel genannten Teile und Prozente beziehen sich auf das Gewicht.

Beispiel

Jeweils 10 %ige Methylenchlorid-Lösungen des Polymeren

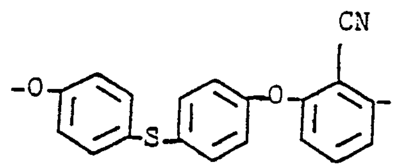 (Tg = 150 °C) (I)

und von Polysulfon (Tg = 191 °C) bzw. von Polyethersulfon (Tg = 228 °C) wurden im Verhältnis A : B = 9 : 1 miteinander gemischt. Das Lösungsmittel wurde verdampft, aus den pulverförmig anfallenden Polymergemischen wurden Platten gepreßt. Schubmodulmessungen ergaben jeweils nur eine einzige Glastemperatur. Demnach handelt es sich bei den vorliegenden Gemischen um einphasige Systeme. Die Preßplatten wurden bei 300 °C 24 Stunden getempert. Dabei erhöhte sich die Glastemperatur um 10 bis 20 °C, die Formteile zeigten nicht mehr die Löslichkeit der Ausgangspolymeren in Methylenchlorid.

**Patentansprüche**

1. Thermoplastische Formmassen, enthaltend ein Gemisch aus

A. 1 bis 99 Gew.-Teilen eines keine reaktive Gruppen enthaltenden amorphen thermoplastischen Polymeren mit einer Glastemperatur oberhalb von 80 °C oder teilkristallinen thermoplastischen Polymeren mit einer Glastemperatur oberhalb von 80 °C und einem Schmelzpunkt oberhalb von 200 °C, und

B. 99 bis 1 Gew.-Teilen eines reaktive Gruppen enthaltenden Polymeren mit einer Glastemperatur oberhalb von 80 °C,

dadurch gekennzeichnet, daß das Polymere B Schwefelbrücken als reaktive Gruppen enthält und ein aromatischer Polyether der Formel

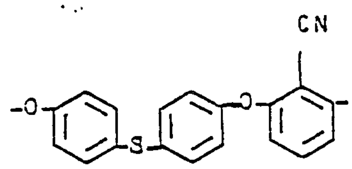 (I)

ein aromatischer Polyether der Formel

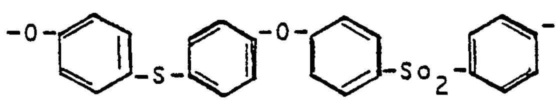 (II)

oder ein aromatisches Polysulfidketon der Formeln

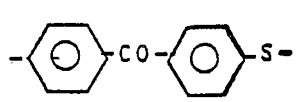 (III)

oder

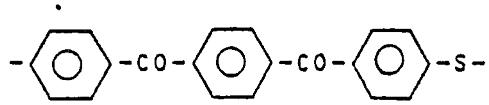 (IV)

ist.

2. Thermoplastische Formmassen nach Anspruch 1, dadurch gekennzeichnet, daß die Polymeren A Polyethersulfone, Polysulfone, Polyetherimide, Polycarbonate oder aromatische Polyester sind.

3. Thermoplastische Formmassen nach Anspruch 1, dadurch gekennzeichnet, daß sie ein Gemisch enthalten aus

A. 98 bis 80 Gew.-Teilen Polyethersulfon oder Polysulfon und

B. 2 bis 20 Gew.-Teilen der Polymeren der Formeln (I), (II), (III) oder (IV).

4. Thermoplastische Formmassen nach Anspruch 1, dadurch gekennzeichnet, daß sie, bezogen auf 100 Gew.-Teile A + B, 25 bis 300 Gew.-Teile Verstärkungsfasern enthalten.

5. Verfahren zur Herstellung von Formkörpern, dadurch gekennzeichnet, daß die thermoplastischen Formmassen nach Anspruch 1 geformt und anschließend mindestens 5 min lang, vorzugsweise auf Temperaturen oberhalb von 200 °C, erhitzt werden, wobei die Kunststoffmatrix so vernetzt wird, daß sie in niedrigsiedenden Kohlenwasserstoffen wie Methylenchlorid praktisch nicht mehr löslich ist.

## Claims

1. A thermoplastic molding material containing a mixture of

A. from 1 to 99 parts by weight of an amorphous thermoplastic polymer which does not contain any reactive groups and has a glass transition temperature above 80 °C or of a partially crystalline thermoplastic polymer which has a glass transition temperature about 80 °C and a melting point above 200 °C and

B. from 99 to 1 parts by weight of a polymer which contains reactive groups and has a glass transition temperature above 80 °C, wherein the polymer B contains sulfur bridges as reactive groups and is an aromatic polyether of the formula

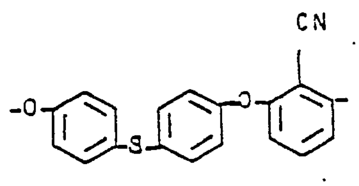

(I)

an aromatic polyether of the formula

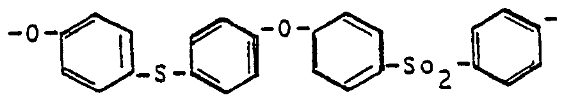

(II)

or an aromatic polysulfide ketone of the formula

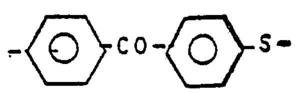

(III)

or

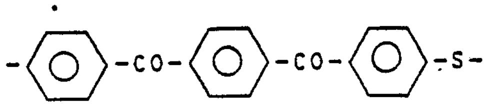

(IV)

2. A thermoplastic molding material as claimed in claim 1, wherein the polymer A is a polyether sulfone, a polysulfone, a polyetherimide, a polycarbonate or an aromatic polyester.

3. A thermoplastic molding material as claimed in claim 1, which contains a mixture of

A. from 98 to 80 parts by weight of a polyether sulfone or polysulfone and

B. from 2 to 20 parts by weight of the polymer of the formula (I), (II), (III) or (IV).

4. A thermoplastic molding material as claimed in claim 1, which contains from 25 to 300 parts by weight of reinforcing fibers per 100 parts by weight of A + B.

5. A process for the production of moldings, wherein the thermoplastic molding material as claimed in claim 1 is molded and then heated for not less than 5 minutes, preferably at above 200 °C, the plastic matrix being crosslinked so as to become virtually insoluble in low boiling hydrocarbons such as methylene chloride.

## Revendications

1. Matières à mouler thermoplastiques, contenant un mélange de

A. 1 à 99 parties en poids d'un polymère thermoplastique amorphe exempt de groupes réactifs, d'une température de transition vitreuse supérieure à 80 °C ou d'un polymère thermoplastique

partiellement cristallisé, exempt de groupes réactifs, avec une température de transition vitreuse supérieure à 80 °C et un point de fusion supérieur à 200 °C, et de

B. 99 à 1 partie(s) en poids d'un polymère à groupes réactifs avec une température de transition vitreuse supérieure à 80 °C,

caractérisées en ce que le polymère est un polymère contenant comme groupes réactifs des ponts soufre et est

soit un polyéther aromatique de la formule

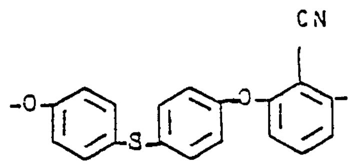

(I)

soit un polyéther aromatique de la formule

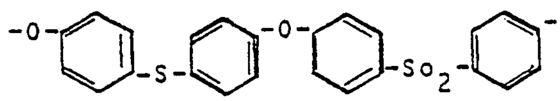

(II)

soit une polysulfure-cétone de l'une des formules

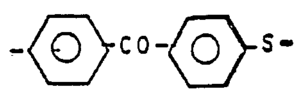

(III)

et

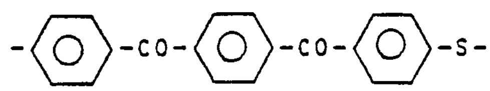

(IV)

2. Matières à mouler thermoplastiques suivant la revendication 1, caractérisées en ce que le polymère A est choisi parmi les polyéther-sulfones, les polysulfones, les polyéther-imides, les polycarbonates et les polyesters aromatiques.

3. Matières à mouler thermoplastiques suivant la revendication 1, caractérisées en ce qu'elles sont composées d'un mélange de

A. 98 à 80 parties en poids d'une polyéther-sulfone ou d'une polysulfone et

B. 2 à 20 parties en poids de polymères des formules (I), (II), (III) et (IV).

4. Matières à mouler thermoplastiques suivant la revendication 1, caractérisées en ce qu'elles contiennent, pour 100 parties en poids de A + B, 25 à 300 parties en poids de fibres de renforcement.

5. Procédé de préparation d'objets moulés, caractérisé en ce que des matières à mouler thermoplastiques suivant la revendication 1 sont façonnées, puis chauffées pendant au moins cinq minutes à une température de préférence supérieure à 200 °C, ce qui provoque une réticulation de la matrice de matière plastique telle qu'elle devient pratiquement insoluble dans des hydrocarbures à bas point d'ébullition tels que le chlorure de méthylène.